(19) Europäisches Patentamt

European Patent Office

Office européen des brevets

(11) Publication number: 0 358 333
A1

(12) **EUROPEAN PATENT APPLICATION**

(21) Application number: 89308028.3

(22) Date of filing: 07.08.89

(51) Int. Cl.⁵: **F16C 3/10 , F16C 3/12**

(30) Priority: 10.08.88 AU 9794/88

(43) Date of publication of application:
**14.03.90 Bulletin 90/11**

(84) Designated Contracting States:
**AT BE CH DE ES FR GB GR IT LI LU NL SE**

(71) Applicant: GREENCARE PTY. LIMITED
14 Parweena Road
Taren Point, NSW 2229(AU)

(72) Inventor: Livingstone, David John
6 Barcoo Island
Sylvania Waters New South Wales(AU)
Inventor: Banyard, Derrick Peter
81 Dolphin Crescent
Whale Beach New South Wales(AU)

(74) Representative: Goodenough, Nigel et al
A.A. Thornton & Co. Northumberland House
303-306 High Holborn
London WC1V 7LE(GB)

(54) **Fabricated crankshaft.**

(57) A crankshaft is fabricated from a plurality of shaft segments (20) and cheek plates (10) interposed therebetween. Each cheek plate includes two holes (11, 12) spaced apart by a distance equal to the crank offset and arranged to accept the shaft segments (20) therein, in a discrete number of equally spaced angular positions, one shaft segment extending from either side of the cheek plate. The ends of each shaft segment (20) and the holes in the cheek plates (10) are each provided with a key arrangement, such as a spline, to prevent relative rotation between the shaft segments and cheek plates. Slots (13, 14) in the cheek plates enable the diameter of the holes (11, 12) to be reduced in diameter by tightening a nut (19) and bolt (18) extending through each cheek plate (10) such that the cheek plates are clamped onto their respective shaft segments (20).

FIG. 3

The present invention relates generally to crankshafts and in particular the invention provides an improved fabricated crankshaft comprising modular components which enable a variety of crank designs to be realised from a small set of modules.

Crankshafts are generally cast or drop-forged, making it difficult and expensive to alter the design of the shaft, such as by changing the number of cranks on a shaft or altering the angular displacement of cranks on the shaft. Further to this, conventional crankshafts do not readily lend themselves to the use of roller bearings.

According to a first aspect, the present invention consists in a fabricated crankshaft comprising a plurality of crank side members and a plurality of shaft segments, each side member having two holes therethrough, the holes having centres displaced by a distance equal to the crank length of the crankshaft and each side member being joined to its two neighboring side members by respective shaft segments mounted through said holes and the two ends of each of the shaft segments and the cooperating holes in the side members being provided with cooperating key means whereby rotation of the shaft segments in the holes is prevented, the key means being arranged to allow the cranks on the crankshaft to occupy a discrete number of equally spaced angular positions about the crankshaft axis.

In one possible embodiment of the invention the hole at one end of the side member is provided with a key way located on the centre-line passing through the centres of the two holes in the side member and the second hole in the side member is provided with key way offset from said centre-line by an angle of 60°. In this embodiment the shaft segments will have at least one key way provided at each end thereof, the two key ways being aligned with one another.

In a preferred embodiment of the invention, the key means comprises cooperating male and female splines on the shaft segment and in the holes, each of the splines being provided with six equally spaced teeth.

Preferably, some form of clamping will also be provided to clamp the side members onto the shaft segments and in one embodiment of the invention the clamping arrangement will consist in slots provided in the side members extending from outer edges of the side member to each of the holes therein and fastener means arranged to apply a force to close the slots, thereby reducing the diameter of the holes and clamping the side members onto their respective shaft segments.

In another embodiment, clamping is achieved by providing radial slots in the spline section of the shaft segments, these slots extending inwardly to a tapered axial hole, a circular wedge with a cooperating taper being located in the hole and having a threaded extension projecting into a threaded central hole in the shaft segment such that rotation of the wedge expands the spline portion of the shaft to clamp the shaft in the cheek plate.

According to a second aspect of the invention, the present invention consists in clamping means for clamping a shaft in a hole wherein the shaft is provided with radial expansion slots and a tapered axial hole in the end of the shaft to be clamped, a circular wedge being located in the tapered hole and having means for pulling said wedge further into said hole to thereby expand the shaft end.

An embodiment of the invention will now be described by way of example with reference to the accompanying drawings in which:-

Figure 1 schematically illustrates a side elevation of the crankshaft of the present invention;

Figure 2 provides an end view of a crankshaft according to a preferred embodiment of the invention;

Figure 3 provides side and end elevations of a crank cheek plate in accordance with an embodiment of the invention;

Figure 4 shows side and end views of a shaft segment in accordance with one embodiment of the invention; and

Figure 5 illustrates a shaft segment in accordance with a further embodiment of the invention.

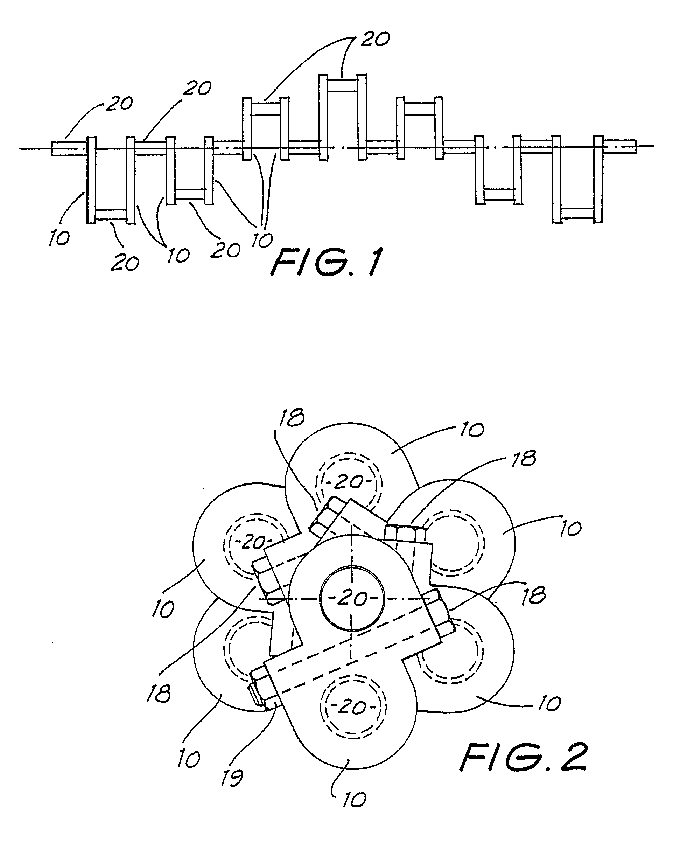

Referring to Figures 1, 2, 3 and 4 the illustrated embodiment of the invention includes a plurality of crank cheek plates 10 joined to one another by intervening shaft segments 20. Using this technique, crankshafts having varying numbers of cranks can be produced from a plurality of side members or cheek plates and shaft segments of one single design.

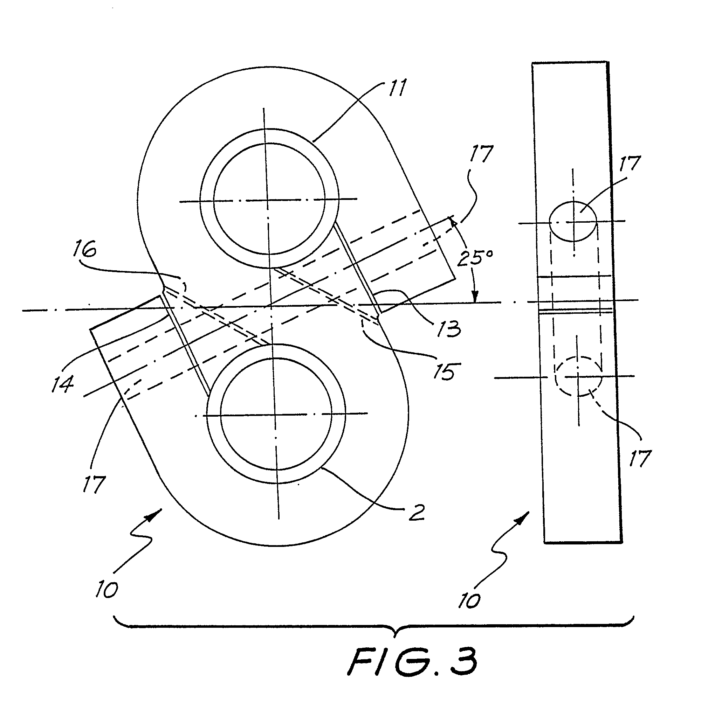

Referring to Figure 3, the preferred cheek plate design will have the shape illustrated, wherein two splined holes 11 and 12 are provided to accommodate the two shaft segments which will extend either side of the plate 10. The centres of the holes 11 and 12 are displaced from one another by a distance representing the offset of the crank pin from the centre-line of the crankshaft and which is in this case 52 mm. Slots 13 and 14, which may have alternate positions 15 and 16 (shown in dash line), enable the diameter of the splined holes 11 and 12 to be closed slightly for clamping of the cheek plate onto its respective splined shafts. A hole 17 through the width of the cheek plate is provided to accommodate a bolt 18 and cooperating nut 19 which are used to clamp up the cheek plate onto the spline shafts.

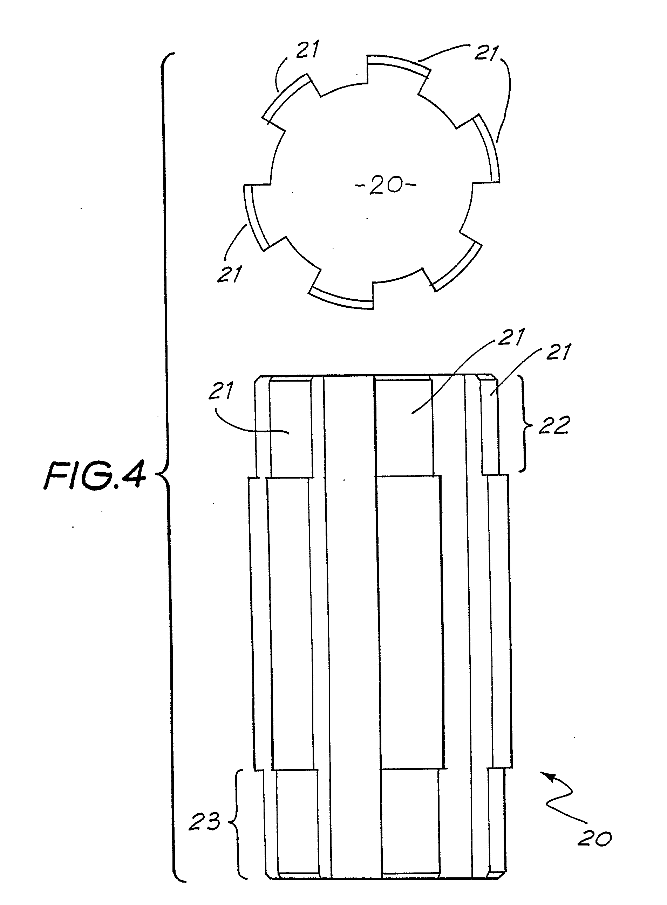

Turning to Figure 4, the shaft segments 20 have splines 21 formed over their entire length, with reduced diameter portions 22 and 23 at either end, which are sized to be an interference fit in holes 11 and 12 of the cheek plates 10 and forming a shoulder which buts up to and locates the cheek plate 10. As the splines are cut with radial walls, clamping of the male and female splines together causes the interleaved splined portions to be tightly wedged together.

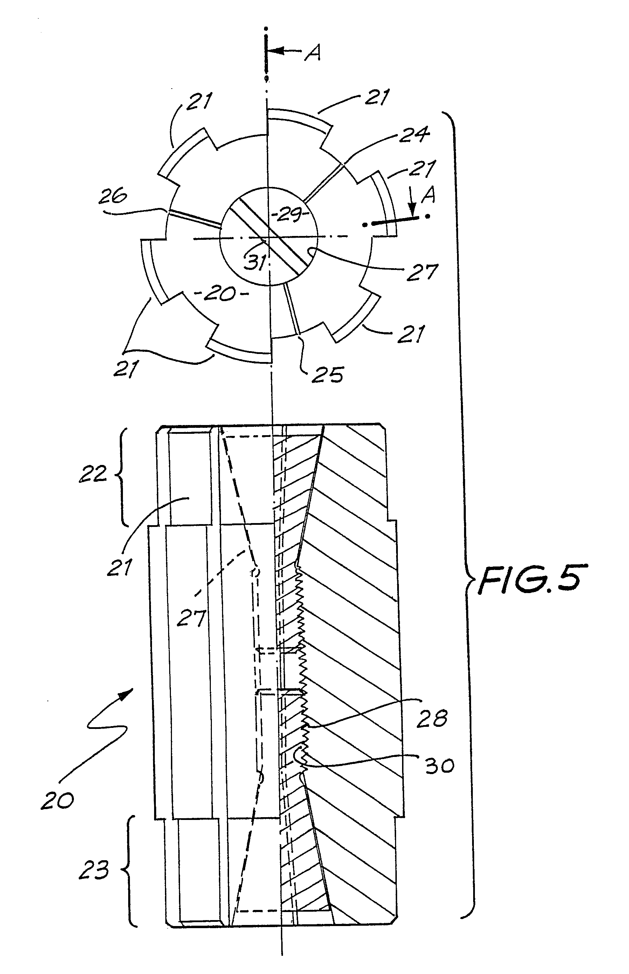

Turning to Figure 5, an alternative clamping arrangement is illustrated, wherein the male spline is expanded, rather than the female spline being contracted. In this embodiment, three radial slots are provided in the splined portion of the shaft segment, each of these slots extending from the outer surface of the shaft to a tapered axial hole 27. The tapered hole 27 extends into a threaded axial hole 28, and a circular wedge 29 having a taper cooperating with the hole 27 and having a threaded end portion 30 is provided to expand the splined portion of the shaft. The circular wedge 29 is provided with a slot 31 in its outer surface to enable rotation of the wedge, causing it to be pulled inwardly by cooperation of the threaded portion 30 with the threaded hole 28, thereby expanding the male splined portion of the shaft segment. It will recognised that when using shafts segments according to the design of Figure 5, the slots 13 and 14 (or alternatively 15 and 16) in the cheek plates of Figure 3 will not be required.

## Claims

1. A fabricated crankshaft comprising a plurality of crank side members and a plurality of shaft segments, each side member having two holes therethrough, the holes having centres displaced by a distance equal to the crank length of the crankshaft and each side member being joined to its two neighboring side members by respective shaft segments mounted through said holes, the two ends of each of the shaft segments and the cooperating holes in the side members being provided with cooperating key means whereby rotation of the shaft segments in their respective holes is prevented, the key means being arranged to allow the cranks on the crankshaft to occupy a discrete number of equally spaced angular positions about the crankshaft axis.

2. The crankshaft of claim 1, wherein a first one of said holes at a first end of each said side member is provided with a key way located on the centre-line passing through the centres of the two holes in the side member and the second of said holes in the side member is provided with key way offset from said centre-line by a predetermined angle, and the shaft segments having at least one key way provided at each end thereof, the two key ways being aligned with one another.

3. The crankshaft of claim 2, wherein the pre-

determined angle is 60°.

4. The crankshaft of claim 1, wherein the key means comprises cooperating male and female splines on the shaft segment and in the holes, each of the splines being provided with a plurality of equally spaced teeth.

5. The crankshaft of claim 4, wherein clamping means are provided to clamp each shaft segment in its respective hole.

6. The crankshaft of claim 5, wherein the clamping means consists in slots provided in the side members extending from outer edges thereof to each of the holes therein and fastener means arranged to apply a force to close the slots, thereby reducing the diameter of the holes and clamping the side members onto their respective shaft segments.

7. The crankshaft of claim 5, wherein radial slots are provided in the spline section of each shaft segment, these slots extending inwardly to tapered axial holes, a circular wedge with a cooperating taper being located in each hole and having a threaded extension projecting into a threaded central hole in the respective shaft segment such that rotation of the wedge expands the spline portion of the shaft to clamp the shaft in the cheek plate.

8. Clamping means for clamping a shaft in a hole wherein the shaft is provided with radial expansion slots and a tapered axial hole in the end of the shaft to be clamped, a circular wedge being located in the tapered hole and having means for pulling said wedge further into said hole to thereby expand the shaft end.

EP 0 358 333 A1

FIG. 1

FIG. 2

FIG.3

FIG.4

21    21

-20-

21

21    21

21    21

22

23

20

A

21    21
24
26    21
29
31    27
20
21    25

22
21
27
20
23

28
30

*FIG.5*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-1 504 238  (R. HILDEBRAND)<br>* Whole document * | 1,4-7 | F 16 C    3/10<br>F 16 C    3/12 |
| A |  | 2,3 | |
| | --- | | |
| Y | FR-A- 763 668  (R. POINSARD)<br>* Page 2; figures 1-2 * | 1,4-6 | |
| | --- | | |
| Y | DE-A-1 775 922  (M.G. FIEDLER)<br>* Page 4; figure 2 * | 1,4,5,7 | |
| X | | 8 | |
| | --- | | |
| Y | FR-A- 606 017  (G.V. HARRISSARD)<br>* Whole document * | 1,4,5,7 | |
| X | | 8 | |
| | --- | | |
| A | FR-A- 618 484  (A. BAER)<br>--- | | |
| A | NL-C-  13 692  (ROLLS-ROYCE LTD)<br>* Page 1, lines 31-55; figure 4 * | 1-3 | |

TECHNICAL FIELDS SEARCHED (Int. Cl.5)

F 16 C

The present search report has been drawn up for all claims

| Place of search | Date of completion of the search | Examiner |
|---|---|---|
| THE HAGUE | 15-11-1989 | BEGUIN C.P. |